# EUROPEAN PATENT SPECIFICATION

(11) **EP 3 836 496 B1**
(45) Date of publication and mention of the grant of the patent: **26.10.2022**
(21) Application number: 19215704.8
(22) Date of filing: 12.12.2019
(51) Int. Cl.: H04L 47/22, H04L 47/24, H04L 47/2425, H04L 47/32, H04L 47/60, H04L 47/62, H04L 47/6295

(54) **METHOD FOR AN IMPROVED TRAFFIC SHAPING AND/OR MANAGEMENT OF IP TRAFFIC IN A PACKET PROCESSING SYSTEM, TELECOMMUNICATIONS NETWORK, SYSTEM, PROGRAM AND COMPUTER PROGRAM PRODUCT**
VERFAHREN ZUR VERBESSERTEN VERKEHRSFORMUNG UND/ODER -VERWALTUNG VON IP-VERKEHR IN EINEM PAKETVERARBEITUNGSSYSTEM, TELEKOMMUNIKATIONSNETZWERK, SYSTEM, PROGRAMM UND COMPUTERPROGRAMMPRODUKT
PROCÉDÉ DE MISE EN FORME DE TRAFIC AMÉLIORÉ ET/OU DE GESTION DE TRAFIC IP DANS UN SYSTÈME DE TRAITEMENT DE PAQUETS, RÉSEAU DE TÉLÉCOMMUNICATIONS, SYSTÈME, PROGRAMME ET PRODUIT PROGRAMME INFORMATIQUE

(43) Date of publication of application: 16.06.2021
(73) Proprietor: Deutsche Telekom AG, 53113 Bonn (DE); Technische Universität Darmstadt, 64289 Darmstadt (DE)
(72) Inventor: NOBACH, Leonhard, 55120 Mainz (DE); KUNDEL, Ralf, 64289 Darmstadt (DE); SCHNEIDER, Fabian, 64283 Darmstadt (DE)
(74) Representative: Schwöbel, Thilo K.

(56) References cited:
- EP-A1- 2 695 325
- US-A1- 2015 016 266
- Ralf Kundel ET AL: "Queueing at the Telco Service Edge: Requirements, Challenges and Opportunities", , 3 December 2019 (2019-12-03), XP055692915, Retrieved from the Internet: URL:http://buffer-workshop.stanford.edu/pa pers/paper7.pdf [retrieved on 2020-05-08]

## Description

### BACKGROUND

The present invention relates to a method for traffic shaping in a packet processing system in a telecommunications network, wherein the packet processing system comprises a programmable packet switching processor and a traffic shaping processor.

Furthermore, the present invention relates to network node, a program and a computer program product for traffic shaping in a telecommunications network.

The exchange of packetized information in broadband communication systems or telecommunications networks, both in fixed-line as in wireless communication systems (or fixed-line communication networks and mobile communication networks) has already grown dramatically and probably will also grow in the future, especially due to the rapid spread of various data services as well as applications in such communication networks.

Currently, commercial off-the-shelf network packet processing chips or integrated circuits, which are typically used in high-performance network switches, are used to process and forward payload to serve subscribers connected to a telecommunications network.

Such network packet processing chips or integrated circuits, also called ASICs (application-specific integrated circuit), commonly support a fixed functionality and a limited scalability of packet queueing (e.g. regarding depth or number of queues) only. However, queueing requirements in a network might exceed, and typically does exceed the capabilities of such conventionally known network packet processing chips or integrated circuits.

Moreover, queueing is required in networking devices in order to buffer packets until they can be sent. Typically, this is very important before network links with limited bandwidth in order to guarantee a link utilization of almost 100%. Disclosures regarding traffic shaping for networks are for example US 20150016266 A1 and WO 2013113396 A1, with additional Information being revealed by Kundel et al. in the publication "Queueing at the Telco Service Edge: Requirements, Challenges and Opportunities". EP2695325 A1 describes hierarchical queue scheduling from a multitude of queues and tagging particular packets with a flow queue identification tag to steer the packet to the appropriate queue.

### SUMMARY

An object of the present invention is to provide a technically simple, effective and cost effective solution for an improved traffic shaping and/or management of IP traffic in a packet processing system, especially as part of a telecommunications network. A further object of the present invention is to provide a corresponding telecommunications network, a corresponding system, and a corresponding program and computer program product.

The object of the present invention is achieved by a method according to claim 1.

It is thereby advantageously possible according to the present invention to overcome the aforementioned restriction (of unsatisfactory queueing capabilities) of the prior art by introducing - in a packet processing system, and besides a packet switching processor - an additional, second-stage processing apparatus, or traffic shaping processor (for example in the form of an ASIC or a programmed FPGA, field programmable gate array) which processes and queues packets after they have been processed by the packet switching processor (or first-stage ASIC) with insufficient queueing capabilities. This forms a system, or packet processing system, of two processing components (packet processing system and traffic shaping processor) where the first one does header processing and packet classification, and the second one is dedicated to queueing functions in sufficient scales.

It is especially preferred that the traffic shaping processor comprises resources to handle a very large number of queues, at least 10.000 queues, but typically providing the capabilities for more than 10.000 queues, preferably more than 50.000 queues, still preferably more than 100.000 different queues, still more preferably more than 200.000 queues, still more preferably more than 400.000 queues, and still more preferably more than 800.000 queues; in all these cases the number of available queues is as large as possible, especially one million queues, or 10 million queues, or 100 million queues. Additionally, not only the number of queues is comparatively large, but also their depth - i.e. the capabilities, especially for each one of the large number of queues, to store many data packets and/or many data packets which have a comparatively large size. Especially a storing capacity of each of the queues of the packet processing system corresponds to 10 MB or more than 10 MB, preferably corresponds to 20 MB or more than 20 MB, still preferably corresponds to 50 MB or more than 50 MB, still preferably corresponds to 100 MB or more than 100 MB; in all these cases the storing capacity of each of the queues of the inventive packet processing system is as large as possible, especially 200 MB, or 1GB, or 10 GB. The total required memory of the whole shaping processor is a junction of the individual queues and thereby multiple GBs (maybe up to 100GB in future, currently up to 1 GB) can be reached.

According to the present invention, the proposed system (or packet processing system, comprising at least one packet switching processor and at least one traffic shaping processor) provides the performance and scalability of current programmable ASICs, but-unlike the state of the art - it also provides the necessary flexibility to offer large-scale traffic shaping, e.g. required in access networks, comprising the required number of queues, as well as the required queue depth, as well as hierarchical scheduling capabilities of the considered data packets.

Data packets are especially, but not necessarily, IP traffic packets, or Ethernet packets, or GEM (GPON encapsulation method) frames - all of which typically also comprise IP traffic packets. Conventionally known hardware switches commonly process packets using a special ASIC which is only designed for packet processing and forwarding.

According to conventionally known systems, since the introduction of the programming language P4 in 2014, a trend towards ASICs with reconfigurable data planes has arisen - e.g. Barefoot Networks currently offers a P4 programmable chip which has a fully programmable pipeline. However, these presently known languages only describe the behavior of the match-action pipeline and do not cover the queueing behavior of these chips. Until now, the queueing behavior is commonly reconfigured within hardware limitations of the chip over a vendor-specific interface. Typically this does not provide the queueing capabilities required especially in access networks, i.e. comprising, in combination, the required number of queues, as well as the required queue depth, as well as hierarchical scheduling capabilities.
Regarding the number of queues and the queue depth in conventionally known systems: Queued packets must be stored in memory on the switch hardware. Typically, this can be done either in internal memory of the ASIC which is implemented with SRAM, or outside the chip in DRAM. SRAM typically provides a rather low capacity in the range < 50 to 70 MB even in devices with highest performance due to technological limitations. When packets are stored outside the chip in DRAM, the size thereof is usually much higher in a scale of n^{*}16GB. However, this memory technology requires pins to interconnect the ASIC and the memory, and furthermore, the bandwidth is commonly much lower than on SRAM, and the latency is usually higher (by technological reasons). The additional pins required by the switching ASIC is the primary reason why most chips have only internal SRAM memory. In conventionally known systems, this is sufficient for most use cases and no external memory is needed. Another solution of conventionally known systems consists of using high bandwidth memory (HBM) (instead of external memory outside the package of the chip): This HBM is placed inside the package next to the ASIC, and, hence, no additional package pins are required.
The queueing capabilities themselves are a further restriction of most packet switching ASICs in conventionally known systems: In most use-cases according to the state of the art, the applications require only a few queueing capabilities, and, hence, the available queueing capability are sufficient.

However, according to the present invention and with the inventive packet processing system (comprising a packet switching processor and a separate traffic shaping processor), new applications requiring more features, like queueing at the service edge of ISPs, become possible. This especially regards the following features, especially the combination thereof:
-- support for "many queues": typically conventionally known switches have less than 10.000 queues, often only around 10 queues per egress port; however, carriers (or network operators) - in order to provide queueing at the service edge of their networks - typically require hundreds of thousands of queues which typically and especially should be provided not to be bound to a dedicated port.
-- sophisticated scheduling mechanisms, especially in combination with a large number of queues: scheduling decides which queue should be served next (different scheduling mechanism are typically applied, e.g. Round-Robin (RR), Weighted Round-Robin (WRR), etc.); it is especially relevant to provide the capability for simple rate limiting (each queue can have a maximum rate (either bytes per second or packets per second), and the scheduler (or scheduling mechanism) guarantees that this limit is not exceeded), and/or for hierarchical rate limiting, especially of up to 6 hierarchical layers (thereby, especially in addition to simple rate limiting, additional rate limits are applied with respect to groups of queues; e.g. five queues (each rate limited at, e.g., 1 Mbit/s) should not exceed a total bandwidth of 2 Mbit/s.
-- Active Queue Management (AQM): In order to create high throughputs with affordable latencies, algorithms, called (active) queue management algorithms, are able to be used (conventionally known switches only support basic algorithms like taildrop, Random Early Detection (RED) or Weighted Random Early Detection (WRED); newer algorithms, e.g. Controlled Delay (CoDel, RFC 8289) and Proportional Integral Controller Enhanced (PIE, RFC 8033), cannot be added by a configuration update and require new hardware).
-- accounting capability: The egress traffic of the queues needs to be accounted (i.e. the number of bytes and packets (typically cumulatively) counted) which is not possible using conventionally known systems in combination with large numbers of queues (as such conventionally known systems, while providing the possibility of counters, do, at maximum, provide for a limited queue number, and, hence, a limited number of counters in the ASIC).

According to the present invention, a solution is proposed that addresses the above mentioned challenges, i.e. support for large numbers of queues combined with sophisticated scheduling mechanisms, active queue management, and also the possibility to provide for accounting capabilities. Accordingly, an improved traffic shaping and/or management of IP traffic is possible in a packet processing system, especially as part of a telecommunications network, by means of the packet processing system comprising the programmable packet switching processor and the traffic shaping processor. Thereby, data packets - received by the packet processing system - are ingressed to the packet switching processor, and egressed by the traffic shaping processor. For an improved traffic shaping and/or management of IP traffic, the method comprises the steps of:
-- in a first step, receiving data packets by the packet switching processor, i.e. a number of considered data packets are, after or while being received by the packet processing system, received by or ingressed to the packet switching processor,
-- in a second step, subsequent to the first step, processing and transmitting the data packets to the traffic shaping processor and thereby appending a queue identification information, i.e. the packet switching processor processes the number of considered data packets, appends a queue identification information to each one of the considered data packets, and transmits the considered data packets to the traffic shaping processor,
-- in a third step, subsequent to the second step, applying traffic shaping (and especially also doing accounting tasks), i.e. the traffic shaping processor applies traffic shaping to the considered data packets by means of using the respective queue identification information of each one of the considered data packets to select a queue for each one of the considered data packets, respectively, and by means of:

- using a number of queues exceeding 10.000 queues, wherein each one of said queues has a depth or a storing capacity of more than 10 MB,
- applying a hierarchical scheduling of the considered data packets.

The telecommunications network might be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

It is advantageously possible and preferred that the data consumers are subscribers of an aggregation network, wherein the aggregation network comprises a network node or network element, especially a broadband network gateway element, wherein the packet processing system comprising the programmable packet switching processor and the traffic shaping processor is preferably part of the network node or network element.

It is thereby advantageously possible to apply the inventive concept in an aggregation network and/or a network node or network element of an aggregation network, serving, especially, a large number of customers or subscribers.

It is advantageously furthermore possible and preferred that - in the third step - the traffic shaping processor applies traffic shaping to the considered data packets by means of using the respective queue identification information, and by means of:
-- using a number of queues exceeding 10.000 queues, wherein each one of said queues has a depth or a storing capacity of more than 10 MB,
-- applying a hierarchical scheduling of the considered data packets.

It is advantageously possible and preferred that the hierarchical scheduling comprises or encompasses:
-- performing or executing a scheduling decision, based on rate limits with hierarchical dependencies, while considering different Quality of Service (QoS) classes, or
-- performing or executing a scheduling decision, based on rate limits with hierarchical dependencies, while considering different Quality of Service (QoS) classes, and while treating QoS-classes differently dependent on the interfering hierarchical scheduler layer.

By means of applying hierarchical scheduling according to these features, it is advantageously possible to comparably easily take the scheduling decision (i.e. which packet should be sent next) taking into consideration the relevant factors, i.e. rate limits with hierarchical dependencies considering different Quality of Service (QoS) classes, or rate limits with hierarchical dependencies considering different Quality of Service (QoS) classes, and additionally treating QoS-classes differently dependent on the interfering hierarchical scheduler layer.

It is advantageously possible and preferred that each specific one of the considered data packets is - besides being related to its assigned or selected queue:
-- related to a specific traffic class out of a plurality of different traffic classes, and
-- related to a specific user or customer of the telecommunications network of a plurality of users or customers of the telecommunications network, and
-- related to a first specific network node of the telecommunications network, and to at least a second specific network node of the telecommunications network, the first specific network node relating to a first stage of the access aggregation network, and the at least second specific network node relating to a second stage of the access aggregation network, and wherein applying the hierarchical scheduling of the considered data packets involves a scheduling that simultaneously takes into account the relation of each one of the considered data packets to the assigned or selected queue, and its specific traffic class, and its specific user or customer, and its first and second specific network node.

By means of applying such an hierarchical scheduling of the considered data packets (i.e. simultaneously taking into account the relation of each one of the considered data packets to the respective queue, the respective traffic class, the respective user or customer, and the respective first and second specific network node) it is advantageously possible to implement a manner of scheduling and traffic shaping that is appropriate and adapted to implement at the service edge of internet service provider's networks.

Furthermore, it is advantageously possible and preferred that the hierarchical scheduling of the considered data packets involves applying a rate limit regarding the considered data packets with respect to the assigned or selected queue, the specific traffic class, the specific user or customer as well as both the first and second specific network nodes, respectively.

By means of applying a rate limit regarding the considered data packets (especially with respect to the assigned or selected queue, the specific traffic class, the specific user or customer as well as both the first and second specific network nodes) it is advantageously possible to define - by means of performing the traffic shaping and scheduling - the IP traffic with respect to individual network elements on different network layers or levels, and thereby especially assure that maximum throughput limits (of such network elements) are respected, i.e. not exceeded.

Furthermore, it is preferred that the traffic shaping processor additionally applies traffic shaping to the considered data packets by means of using active queue management, especially using one or a plurality of the following algorithms: taildrop, Random Early Detection (RED) or Weighted Random Early Detection (WRED), Controlled Delay, CoDel, and Proportional Integral Controller Enhanced, PIE and/or especially by means of at least one out of the following:
-- actively dropping data packets,
-- raising explicit congestion notification, ECN, flags, and
-- attaching more advanced congestion information to the data packets..

By means of using active queue management, it is advantageously possible to further render the traffic shaping and/or management of IP traffic in the packet processing system more stable, more secure and more flexible.

Furthermore, the traffic shaping processor can additionally provide a counting of the egress traffic of the queues, especially by means of counting the number of bytes and/or the number of packets, wherein said counting is performed independently for each of the queues of the traffic shaping processor.

By means of providing a counting of the egress traffic of the different queues, it is advantageously possible to easily provide for accounting capabilities within the packet processing system.

Furthermore, the queue identification information, can be appended to each one of the considered data packets, is part of the considered data packets, respectively, especially positioned in front of the Ethernet header or between the Ethernet and the IP header, and wherein the traffic shaping processor removes the queue identification information from the considered data packets prior to storing the considered IP traffic packet in the selected or specified queue, respectively.

By means appending the queue identification information to each one of the considered data packets and being part of the considered data packets, it is advantageously possible that the packet switching processor part of the packet processing system is able to communicate with the traffic shaping processor part of the packet processing system. It is advantageous to place the queue identification information in the front (in the first bits or bytes) of the (or each) packet or data packet; this makes it easier for the shaping processor to extract and remove this information - hence no complex packet parsing is needed. Additionally, a complicated lookup (e.g. based on IP addresses of the packet) would need to be performed inside the shaping processor; such a lookup requires correspondingly capable hardware.

Furthermore, it is advantageously possible and preferred that the queue identification information corresponds to a simple consecutive number, or different parts of the queue identification information have different meanings, especially different shared links/resources in an access tree.

Thereby, it is advantageously possible to provide for an efficient communication between the packet switching processor part of the packet processing system and the traffic shaping processor part of the packet processing system.

Furthermore, it is preferred that the first specific network node of the telecommunications network corresponds to an access node, especially a DSLAM node, Digital Subscriber Line Access Multiplexer node, serving the specific user or customer, and/or wherein the second specific network node of the telecommunications network corresponds to broadband network gateway serving the specific user or customer.

Furthermore, the present invention relates to a telecommunications network according to claim 12.

Furthermore, the present invention relates to a network node or network element according to claim 11.

Still additionally, the present invention relates to a program comprising a computer readable program code according to claim 13.

Furthermore, the present invention relates to a computer program product according to claim 14.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a packet processing system comprising a packet switching processor or packet switching processor part as well as a traffic shaping processor or traffic shaping processor part.
Figure 2 schematically illustrates an example of a queue identification information to be appended to a IP traffic packet by the packet switching processor, and, later on, used by the traffic shaping processor to provide for a corresponding traffic shaping and scheduling.
Figure 3 schematically illustrates a representation of further details of a traffic shaping processor.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

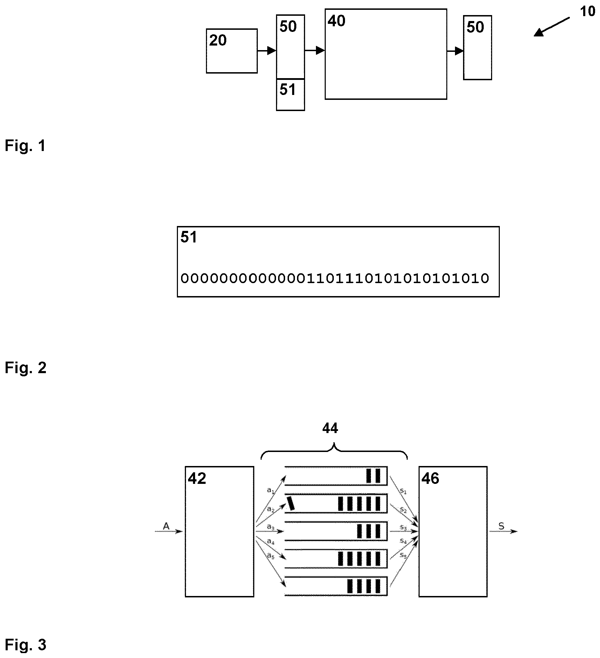

In Figure 1, a packet processing system 10 is schematically illustrated. The packet processing system 10 comprises a packet switching processor 20 or packet switching processor part 20 as well as a traffic shaping processor 40 or traffic shaping processor part 40. The packet switching processor 20 is especially provided as a P4 processor or P4 capable processor. The traffic shaping processor 40 especially comprises a multiplexer, a multitude of different queues (typically more than 100.000), and different pieces of runtime configuration information (such as, e.g., a transmission rate to be applied, a burst size per queue, etc.), as well as an arbiter or algorithm.

The architecture of the packet processing system 10 (with its at least two part of the packet switching processor 20 and the traffic shaping processor 40) provides for a queueing disaggregation (from packet switching) by means of two different parts or portions, especially two different chips or integrated circuits.

The placement or assembly of these two (or more) chips (or integrated circuits, i.e. the two different parts or portions) can be either in the same ASIC package, in the same device (e.g. one switch case) or in different devices. All these designs have different advantages and disadvantages:
According to a first arrangement, the two different parts or portions are located or arranged in the same package: This means, both chips are manufactured within the same package (i.e. an arrangement that is comparatively similar to the typical location or arrangement of High-Bandwidth Memory (HBM)). The advantage of such an embodiment is that no additional package pins are needed; the disadvantage is that such an arrangement is typically expensive for small production numbers.
According to a second arrangement, the two different parts or portions are located or arranged in or as part of the same device or same board: This means that both chips integrated circuits (that are separated but) placed on the same printed circuit board (PCB), also known as "mainboard". This means that the chips, including the package, are off-the-shelf hardware; the pins of the chip are electrically directly attached; no expensive wires (like in the third alternative embodiment) are needed to connect the chips. However, a special device needs to be built, but on-demand manufacturers are able to do that even for comparatively low production numbers.
According to a third arrangement, the two different parts or portions hosted by two different devices, i.e. they are placed closely together and are connected by cables (e.g. Ethernet based copper or (optical) fiber)

Data packets 50 are, after or while being received by the packet processing system, ingressed to the packet switching processor 20, and are, in order to be transmitted by the packet processing system 10, egressed by the traffic shaping processor 40, i.e. the processing chain of data packets 50 leads them to the packet switching processor 20 first and then to the traffic shaping processor 40.

Hence, data packets 50 (comprising, as usual, a MAC information or MAC address (media access control address), an (or a plurality of) IP address indication(s) or information, a payload portion, etc.) are schematically represented, in Figure 1, at different points in the IP traffic packet processing chain:
a first IP traffic packet 50 is schematically shown between packet switching processor 20 (or packet switching processor part 20 of the packet processing system 10), and the traffic shaping processor 40 (or traffic shaping processor part 40 of the packet processing system), wherein this first IP traffic packet 50 is schematically shown as having a queue identification information 51 appended. A second IP traffic packet 50 is schematically shown after the traffic shaping processor 40 (or traffic shaping processor part 40); the second IP traffic packet 50 has the queue identification information 51 removed as the queue identification information 51 primarily serves the purpose that the packet switching processor 20 is able to inform the traffic shaping processor 40 about the respective IP traffic packet 50, especially regarding its treatment and its processing and handling, especially with regard to its queue, etc.

The packet processing (of data packets 50) in the packet switching processor 20 is performed as known with a common packet processor, for example a Barefoot P4 or Broadcom NPL ASIC. After processing a packet (or a plurality of considered data packets), it is (or these are) forwarded to the traffic shaping processor 40, e.g. a second packet processor, which is exclusively responsible for queueing, or traffic shaping. The requirements to be solved by the first packet processor (or packet switching processor 20) can be fulfilled by many ASICs on the market (e.g. Barefoot Tofino, Broadcom Trident, ...), available in high volumes. In contrast, the second processor (traffic shaping processor 40) is only in charge of queueing/traffic shaping of pre-classified packets (i.e. data packets 50 having passed the packet switching processor 20, and having the queue identification information 51 appended), and thus has a lower functional complexity. Thus, the system provides the option to use FPGAs (in order to realize the traffic shaping processor 40) instead of using special-purpose ASICs.

It is especially proposed to provide the packet processing system 10 with two hardware components, i.e. the packet switching processor 20 and the traffic shaping processor 40.

The packet (switching) processor 20 is able to append an information (especially the queue identification information 51) to the packet (i.e. to each of the data packets 50 traversing the packet processing system 10) which allows the subsequent shaping processor (traffic shaping processor 40) to determine a queue for the packet. Especially a queue ID 51 or queue identification information 51 is appended.

A straightforward option is to put the queue ID (or queue identification information 51) in front of the Ethernet header of the IP traffic packet 50. Alternatively, the queue ID information (or queue identification information 51) can be inserted at another position in the IP traffic packet 50, for example between the Ethernet and IP header (similar to a VLAN tag). The (traffic) shaping processor 40 is aware of the format of the inserted queueing information (e.g. the queue ID or queue identification information), removes the queue ID, and stores the IP traffic packet 50 in the specified queue of the traffic shaping processor 40. The queue ID (or queue identification information 51 can be either a simple consecutive number, or different parts of the ID have different meanings. An example thereof is shown in Figure 2. The additional header (or queue identification information 51) within each of the data packets 50, independently from its position in the header stack, increases the average packet size whereas the payload size remains. In fact, this slightly reduces the useable bandwidth. This issue can be tackled and is solved by the present invention, by replacing the existing Ethernet headers with the queue ID header. The missing Ethernet header can be added after dequeuing the packets before sending them on the egress side of the whole system. This additional improvement works for all three placement methods.

In Figure 2, an example of a queue identification information 51 is schematically shown. The queue identification information 51 is appended to an IP traffic packet 50 by the packet switching processor 20, and, later on, used by the traffic shaping processor 40 to provide for a corresponding traffic shaping and scheduling. Different parts of the queue identification information 51 can be used to describe, for example, different shared links/resources in an access tree.

In the exemplary representation of the queue identification information 51 shown in Figure 2, the right-most three bits ("010") exemplarily indicate a quality-of-service class (or a n₁-bit QoS Class); the next six bits towards the left ("010101") exemplarily indicate a n₂-bit identifier; the next five bits towards the left ("10101") exemplarily indicate a n₃-bit identifier; the next five bits towards the left ("11011") exemplarily indicate a n4-bit identifier; the next thirteen bits towards the left ("00000000000") exemplarily indicate a further identifier or a 0-padding.

Reverting again to figure 1, both processors (i.e. the packet switching processor 20, and the traffic shaping processor 40) can have separate control plane interfaces for reconfiguration and flow rule installing. According to an exemplary embodiment according to the present invention, this is done over PCIe (Peripheral Component Interconnect Express) for all common ASICs. However, other technologies are available to implement the configuration interfaces, like JTAG (Joint Test Action Group), USB (universal seriral bus), I2C (Inter-Integrated Circuit), SPI (Serial Peripheral Interface) or Ethernet.

The packet flow arrangement of the 2-chip queueing design of the packet processing system 10 can be used in different ways, however, the data packets 50 to be treated (i.e. passing the packet switching processor 20, then a queue identification information being appended, and then the traffic being shaped by the traffic shaping processor 40) are all traversing or are all passing through the packet processing system 10 in the same manner as described. It might be the case that - especially when implemented in an aggregation network, where the downlink traffic (from the network to the clients or subscribers) typically needs shaping or needs to be shaped - data packets in the opposite direction, i.e. uplink data packets in an aggregation network, might traverse or pass through the packet processing system 10 in opposite direction (i.e. first pass through the traffic shaping processor 40, and then through the packet switching processor 20; however, in this case, such data packets are typically transparently transmitted through the packet processing system 10.
For the purpose of implementation, the flow of the data packets 50 is always in the direction: Packet switching processor 20 towards traffic shaping processor 40, i.e. the packet goes only once through the packet processor and shaping processor; thus, the egress ports of the packet processing system 10 are connected to the traffic shaping processor 40 and the ingress ports are connected to the packet switching processor 20. In order to support bidirectional flows, a packet forwarding in the opposite direction must be implemented within the packet processing system 10, i.e. the IP traffic packet is received by the packet switching processor 20 and transmitted (with the queue identification information 51) to the traffic shaping processor 40. This design can utilize the chips up to the maximum bandwidth (because every packet is touched only once by each chip); alternatively it is possible to connect multiple shaping-processors (i.e. traffic shaping processor 40 units or modules) to one packet-processor (or packet switching processor 20) and vice versa. This also allows the use of special L1/L2 (layer 1 / layer 2) protocols such as Passive Optical Network (PON) technologies, such as GPON (Gigabit-capable Passive Optical Network), XGPON (Gigabit-capable PON), or XGSPON on the shaping-processor side (if supported by the shaping-chip) with standard packet-processors (which, e.g., only support Ethernet).

Figure 3 schematically illustrates a representation of further details of a traffic shaping processor 40. The traffic shaping processor 40 comprises a first part 42 (or first module or first component), corresponding to or implementing a classifier or queue management algorithm. Inputs (or ingresses) (schematically denoted by reference sign A in Figure 3) to the traffic shaping processor 40 are provided to the first part 42. The traffic shaping processor 40 furthermore also comprises a second part 46 (or second module or second component), corresponding to or implementing a scheduling algorithm. Output (or egresses) (schematically denoted by reference sign S in Figure 3) from the traffic shaping processor 40 are provided by the second part 46. The traffic shaping processor 40 furthermore also comprises a queue part 44 or queue element. Each queue (five of which are schematically represented in Figure 3, but shown without an individual, respective reference sign) of the queue part 44 comprises an input side (schematically represented on the left hand side in Figure 3) and an output side (schematically represented on the right hand side in Figure 3). The processing of (payload) data, especially data packets and within the traffic shaping processor 40 can schematically be understood as follows: The first part 42 receives the incoming (or ingressing) data packets (collectively denoted by reference sign A), and distributes the incoming packets to the different queues of the queue part 44 as individual inputs a₁, a₂, a₃, a₄, as of the different queues of the queue part 44. The second part 46 takes individual data packets from the different queues of the queue part 44 as individual inputs s₁ s₂, s₃ s₄ s₅ of the different queues of the queue part 44, and provides the resulting traffic (or egressing) as data packets (collectively denoted by reference sign S) to the egress of the traffic shaping processor 40 (and, as a consequence, to the egress of the packet processing system 10. Hence, it is proposed to separate the functionalities of a packet processor (or packet switching processor 20) on the one hand, and of the queueing behavior (or traffic shaping processor 40) on the other hand, especially in two separate chips or integrated circuits. Thereby, it is especially advantageously possible to realize a separation or disaggregation between the functionality of queue selection (provided for in the first chip or packet switching processor 20) and the functionality of queueing (provided for in the second chip or traffic shaping processor 40). Additionally - by means of using the queue identification information 51 - it is advantageously possible to realize an information encapsulation of queue affiliation in the packet bitstream, i.e. as part of the data packets that collectively correspond to the IP traffic to be processed and shaped by the packet processing system 10. Accordingly, it is advantageously possible to provide for a usage of FPGAs, NPUs (network processing units) or other highly flexible programmable chips as shaping processor in order to increases the flexibility due to the possibility of implementing AQM-algorithms and (hierarchical) scheduling behavior. This advantageously provides the possibility to realize special queueing requirements (e.g. carrier access network queueing) with off-the-shelf hardware.

## Claims

1. Method for traffic shaping in a packet processing system (10), in a telecommunications network (100),
wherein the packet processing system (10) comprises a programmable packet switching processor (20) and a traffic shaping processor (40),
wherein data packets received by the packet processing system (10) are ingressed to the packet switching processor (20), and wherein the data packets transmitted by the packet processing system (10) are egressed by the traffic shaping processor (40), wherein the traffic shaping processor (40) comprises a multitude of different queues,
wherein for traffic shaping, the method comprises the following steps:
-- in a first step, a number of considered data packets (50), after or while being received by the packet processing system (10), are ingressed to the packet switching processor (20),
-- in a second step, subsequent to the first step, the packet switching processor (20) processes the number of considered data packets (50), appends a queue identification information (51) to each one of the considered data packets (50), and transmits the considered data packets (50) to the traffic shaping processor (40), wherein the existing Ethernet headers of the considered data packets (50) are replaced with the queue identification information (51),
-- in a third step, subsequent to the second step, the traffic shaping processor (40) applies traffic shaping to the considered data packets (50) by means of using the queue identification information (51) of each one of the considered data packets (50) to select a queue from the multitude of different queues for each one of the considered data packets (50), such that a multitude of data consumers can be provided with data packets (50) in parallel,
wherein the missing Ethernet headers are added to each of the considered data packets (50) after dequeuing the considered data packets (50) before being sent on egress from the packet processing system (10).

2. Method according to claim 1, wherein the data consumers are subscribers of an aggregation network of the telecommunications network (100), wherein the aggregation network comprises a network node, wherein the network node comprises the packet processing system and optionally the network node is a broadband network gateway element.

3. Method according to one of the preceding claims, wherein - in the third step - the traffic shaping processor (40) applies traffic shaping to the considered data packets (50) by means of using the respective queue identification information (51), and:
-- wherein the multitude of different queues is a number of queues exceeding 10000 queues, wherein each one of said queues has a depth or a storing capacity of more than 10 MB, and/or
-- applying a hierarchical scheduling of the considered data packets (50).

4. Method according to claim 3, wherein the hierarchical scheduling comprises executing a scheduling decision, based on rate limits with hierarchical dependencies, while considering different Quality of Service, QoS, classes.

5. Method according to one of claims 3 or 4, wherein each one of the considered data packets (50) is - besides being related to its selected queue:
-- related to a specific traffic class out of a plurality of different traffic classes, and
-- related to a specific user or customer of the telecommunications network (100) of a plurality of users or customers of the telecommunications network (100), and
-- related to a first specific network node of the telecommunications network (100), and to at least a second specific network node of the telecommunications network (100), the first specific network node relating to a first stage of the aggregation network, and the at least second specific network node relating to a second stage of the aggregation network, and
wherein applying the hierarchical scheduling of the considered data packets (50) involves a scheduling that simultaneously takes into account the relation of each one of the considered data packets (50) to the selected queue, and its specific traffic class, and its specific user or customer, and its first and second specific network node.

6. Method according to claim 5, wherein the hierarchical scheduling of the considered data packets (50) involves applying a rate limit regarding the considered data packets (50) with respect to the selected queue, the specific traffic class, the specific user or customer as well as both the first and second specific network nodes.

7. Method according to one of the preceding claims, wherein the traffic shaping processor (40) additionally applies traffic shaping to the considered data packets (50) by means of using active queue management, optionally using one or a plurality of the following algorithms: taildrop, Random Early Detection, RED, or Weighted Random Early Detection, WRED, Controlled Delay, CoDel, and Proportional Integral Controller Enhanced, PIE,
and/or by means of at least one out of the following:
-- actively dropping considered data packets,
-- raising explicit congestion notification, ECN, flags, and
-- attaching more advanced congestion information to the considered data packets.

8. Method according to one of the preceding claims, wherein the traffic shaping processor (40) additionally provides a counting of egress traffic from the multitude of different queues, optionally by means of counting a number of bytes and/or a number of packets, wherein said counting is performed independently for each of the queues of the multitude of different queues in the traffic shaping processor (40).

9. Method according to claim 1, wherein the queue identification information corresponds to a consecutive number.

10. Method according to one of claims 5 to 9, wherein the first specific network node of the telecommunications network (100) corresponds to an access node, optionally a DSLAM node, Digital Subscriber Line Access Multiplexer node, an OLT node, optical line termination node, or a DPU, distribution point node, serving the specific user or customer, and/or wherein the second specific network node of the telecommunications network (100) corresponds to broadband network gateway serving the specific user or customer.

11. Network node comprising a packet processing system (10), the packet processing system (10) being configured to perform the method of one of claims 1 to 10.

12. Telecommunications network (100) comprising a network node according to claim 11.

13. Program comprising a computer readable program code or hardware logic description, which, when executed on a computer or on a network node of a telecommunications network (100) or on a packet processing system (10) or on an ASIC, causes the computer or the network node of the telecommunications network (100) or the packet processing system (10) or the ASIC to perform a method according one of claims 1 to 10.

14. Computer program product or hardware logic description product for traffic shaping in a packet processing system (10), the computer program product comprising a computer program stored on a storage medium, the computer program comprising program code which, when executed on a computer or on a network node of a telecommunications network (100) or on a packet processing system (10) or on an ASIC, causes the computer or the network node of a telecommunications network (100) or the packet processing system (10) or the ASIC to perform a method according one of claims 1 to 10.

## Patentansprüche

1. Verfahren zur Verkehrsformung in einem Paketverarbeitungssystem (10) in einem Telekommunikationsnetz (100),
wobei das Paketverarbeitungssystem (10) einen programmierbaren Paketvermittlungsprozessor (20) und einen Verkehrsformungsprozessor (40) umfasst,
wobei durch das Paketverarbeitungssystem (10) empfangene Datenpakete in den Paketvermittlungsprozessor (20) eingespeist werden, und wobei die durch das Paketverarbeitungssystem (10) gesendeten Datenpakete durch den Verkehrsformungsprozessor (40) ausgegeben werden, wobei der Verkehrsformungsprozessor (40) eine Vielzahl verschiedener Warteschlangen umfasst,
wobei das Verfahren für die Verkehrsformung die folgenden Schritte umfasst:
- in einem ersten Schritt wird eine Anzahl von in Betrachtet gezogenen Datenpaketen (50), nachdem oder während sie durch das Paketverarbeitungssystem (10) empfangen wurden, in den Paketvermittlungsprozessor (20) eingespeist,
- in einem zweiten Schritt, im Anschluss an den ersten Schritt, verarbeitet der Paketvermittlungsprozessor (20) die Anzahl in Betracht gezogener Datenpakete (50), hängt eine Warteschlangen-Identifikationsinformation (51) an jedes der in Betracht gezogenen Datenpakete (50) an, und sendet die in Betracht gezogenen Datenpakete (50) an den Verkehrsformungsprozessor (40), wobei die vorhandenen Ethernet-Header der in Betracht gezogenen Datenpakete (50) durch die Warteschlangen-Identifikationsinformation (51) ersetzt werden,
- in einem dritten Schritt, im Anschluss an den zweiten Schritt, wendet der Verkehrsformungsprozessor (40) Verkehrsformung auf die in Betrachtet gezogenen Datenpakete (50) an, indem er die Warteschlangen-Identifikationsinformation (51) jedes der in Betrachtet gezogenen Datenpakete (50) verwendet, um eine Warteschlange aus der Vielzahl verschiedener Warteschlangen für jedes der in Betrachtet gezogenen Datenpakete (50) auszuwählen, dergestalt, dass eine Vielzahl von Datenverbrauchern parallel mit Datenpaketen (50) versorgt werden können,
wobei die fehlenden Ethernet-Header zu jedem der in Betrachtet gezogenen Datenpakete (50) hinzugefügt werden, nachdem die in Betrachtet gezogenen Datenpakete (50) aus der Warteschlange entfernt wurden, bevor sie beim Verlassen des Paketverarbeitungssystems (10) gesendet werden.

2. Verfahren nach Anspruch 1, wobei die Datenverbraucher Teilnehmer eines Aggregationsnetzes des Telekommunikationsnetzes (100) sind, wobei das Aggregationsnetz einen Netzknoten umfasst, wobei der Netzknoten das Paketverarbeitungssystem umfasst und optional der Netzknoten ein Breitbandnetz-Gateway-Element ist.

3. Verfahren nach einem der vorangehenden Ansprüche, wobei in dem dritten Schritt der Verkehrsformungsprozessor (40) eine Verkehrsformung auf die in Betrachtet gezogenen Datenpakete (50) unter Verwendung der jeweiligen Warteschlangen-Identifikationsinformation (51) anwendet, und:
- wobei die Vielzahl verschiedener Warteschlangen eine Anzahl von Warteschlangen ist, die 10000 Warteschlangen übersteigt, wobei jede der Warteschlangen eine Tiefe oder eine Speicherkapazität von mehr als 10 MB aufweist, und/oder
- Anwenden einer hierarchischen Zeitplanung der in Betrachtet gezogenen Datenpakete (50).

4. Verfahren nach Anspruch 3, wobei die hierarchische Planung das Ausführen einer Planungsentscheidung auf der Grundlage von Ratengrenzen mit hierarchischen Abhängigkeiten umfasst, während verschiedene Dienstgüte (QoS: Quality of Service)-Klassen berücksichtigt werden.

5. Verfahren nach einem der Ansprüche 3 und 4, wobei jedes der in Betrachtet gezogenen Datenpakete (50) nicht nur mit seiner ausgewählten Warteschlange in Beziehung steht, sondern auch:
- mit einer bestimmten Verkehrsklasse aus mehreren verschiedenen Verkehrsklassen in Beziehung steht, und
- mit einem bestimmten Benutzer oder Kunden des Telekommunikationsnetzes (100) von mehreren Benutzern oder Kunden des Telekommunikationsnetzes (100) in Beziehung steht, und
- mit einem ersten spezifischen Netzknoten des Telekommunikationsnetzes (100) und mit mindestens einem zweiten spezifischen Netzknoten des Telekommunikationsnetzes (100) in Beziehung steht, wobei der erste spezifische Netzknoten mit einer ersten Stufe des Aggregationsnetzes in Beziehung steht und der mindestens zweite spezifische Netzknoten mit einer zweiten Stufe des Aggregationsnetzes in Beziehung steht, und
wobei das Anwenden der hierarchischen Planung der in Betrachtet gezogenen Datenpakete (50) eine Disponierung enthält, die gleichzeitig die Beziehung jedes der in Betrachtet gezogenen Datenpakete (50) zu der ausgewählten Warteschlange und seiner spezifischen Verkehrsklasse und seinem spezifischen Benutzer oder Kunden und seinem ersten und zweiten spezifischen Netzknoten berücksichtigt.

6. Verfahren nach Anspruch 5, wobei die hierarchische Disponierung der in Betrachtet gezogenen Datenpakete (50) das Anwenden einer Ratenbegrenzung bezüglich der in Betrachtet gezogenen Datenpakete (50) in Bezug auf die ausgewählte Warteschlange, die spezifische Verkehrsklasse, den spezifischen Benutzer oder Kunden sowie sowohl den ersten als auch den zweiten spezifischen Netzknoten enthält.

7. Verfahren nach einem der vorangehenden Ansprüche, wobei der Verkehrsformungsprozessor (40) zusätzlich Verkehrsformung auf die in Betrachtet gezogenen Datenpakete (50) anwendet, indem er aktives Warteschlangenmanagement verwendet, wobei optional einer oder mehrere der folgenden Algorithmen verwendet werden: Taildrop, Random Early Detection (RED), oder Weighted Random Early Detection (WRED), Controlled Delay (CoDel), und Proportional Integral Controller Enhanced (PIE),
und/oder mittels mindestens einer der folgenden Maßnahmen:
- aktives Abwerfen von in Betracht gezogenen Datenpaketen,
- Erstellen von Explicit Congestion Notification (ECN)-Flags und
- Anhängen ausführlicherer Netzüberlastungsinformationen an die in Betrachtet gezogenen Datenpakete.

8. Verfahren nach einem der vorangehenden Ansprüche, wobei der Verkehrsformungsprozessor (40) zusätzlich eine Zählung des abgehenden Verkehrs aus der Vielzahl verschiedener Warteschlangen - optional mittels Zählen einer Anzahl von Bytes und/oder einer Anzahl von Paketen - bereitstellt, wobei die Zählung unabhängig für jede der Warteschlangen der Vielzahl verschiedener Warteschlangen in dem Verkehrsformungsprozessor (40) durchgeführt wird.

9. Verfahren nach Anspruch 1, wobei die Warteschlangen-Identifikationsinformation einer laufenden Nummer entspricht.

10. Verfahren nach einem der Ansprüche 5 bis 9, wobei der erste spezifische Netzknoten des Telekommunikationsnetzes (100) einem Zugangsknoten, optional einem DSLAM-Knoten (Digital Subscriber Line Access Multiplexer-Knoten), einem OLT-Knoten (Optical Line Termination-Knoten) oder einem DPU (Distribution Point Node) entspricht, der den spezifischen Benutzer oder Kunden bedient, und/oder wobei der zweite spezifische Netzknoten des Telekommunikationsnetzes (100) einem Breitbandnetz-Gateway entspricht, der den spezifischen Benutzer oder Kunden bedient.

11. Netzwerkknoten, umfassend ein Paketverarbeitungssystem (10), wobei das Paketverarbeitungssystem (10) so konfiguriert ist, dass es das Verfahren nach einem der Ansprüche 1 bis 10 durchführt.

12. Telekommunikationsnetz (100), umfassend einen Netzknoten nach Anspruch 11.

13. Programm, das einen computerlesbaren Programmcode oder eine Hardware-Logikbeschreibung umfasst, die, wenn sie auf einem Computer oder in einem Netzknoten eines Telekommunikationsnetzes (100) oder in einem Paketverarbeitungssystem (10) oder in einem ASIC ausgeführt wird, den Computer oder den Netzknoten des Telekommunikationsnetzes (100) oder das Paketverarbeitungssystem (10) oder den ASIC veranlasst, ein Verfahren nach einem der Ansprüche 1 bis 10 durchzuführen.

14. Computerprogrammprodukt oder Hardware-Logikbeschreibungsprodukt zur Verkehrsformung in einem Paketverarbeitungssystem (10), wobei das Computerprogrammprodukt ein auf einem Speichermedium gespeichertes Computerprogramm umfasst, wobei das Computerprogramm Programmcode umfasst, der, wenn er auf einem Computer oder in einem Netzknoten eines Telekommunikationsnetzes (100) oder in einem Paketverarbeitungssystem (10) oder in einem ASIC ausgeführt wird, den Computer oder den Netzknoten eines Telekommunikationsnetzes (100) oder das Paketverarbeitungssystem (10) oder den ASIC veranlasst, ein Verfahren nach einem der Ansprüche 1 bis 10 durchzuführen.

## Revendications

1. Procédé de mise en forme du trafic dans un système de traitement de paquets (10), à l'intérieur d'un réseau de télécommunications (100),
dans lequel le système de traitement des paquets (10) comprend un processeur programmable de commutation par paquets (20) et un processeur de mise en forme de trafic (40),
dans lequel les paquets de données reçus par le système de traitement de paquets (10) sont introduits dans le processeur de commutation par paquets (20) et dans lequel les paquets de données transmis par le système de traitement de paquets (10) sont délivrés en sortie par le processeur de mise en forme de trafic (40), dans lequel le processeur de mise en forme de trafic (40) comprend une multitude de files d'attente différentes,
dans lequel pour la mise en forme du trafic, le procédé comprend les étapes suivantes :
- dans une première étape, un certain nombre de paquets de données considérés (50), après ou pendant leur réception par le système de traitement de paquets (10), sont introduits dans le processeur de commutation par paquets (20),
- dans une deuxième étape, postérieure à la première étape, le processeur de commutation par paquets (20) traite le nombre de paquets de données considérés (50), ajoute une information d'identification de file d'attente (51) à chacun des paquets de données considérés (50), et transmet les paquets de données considérés (50) au processeur de mise en forme de trafic (40), dans lequel les en-têtes Ethernet existants des paquets de données considérés (50) sont remplacés par les informations d'identification de files d'attente (51),
- dans une troisième étape, postérieure à la deuxième étape, le processeur de mise en forme de trafic (40) applique une mise en forme de trafic aux paquets de données considérés (50) au moyen de l'information d'identification de file d'attente (51) de chacun des paquets de données considérés (50) pour sélectionner une file d'attente parmi la multitude de files d'attente différentes pour chacun des paquets de données considérés (50), de manière qu'une multitude de consommateurs de données puisse être pourvue de paquets de données (50) en parallèle,
dans lequel les en-têtes Ethernet manquants sont ajoutés à chacun des paquets de données considérés (50) après le retrait des paquets de données considérés (50) des files d'attente avant leur envoi en sortie du système de traitement de paquets (10).

2. Procédé selon la revendication 1, dans lequel les consommateurs de données sont des abonnés d'un réseau d'agrégation du réseau de télécommunications (100), dans lequel le réseau d'agrégation comprend un nœud de réseau, dans lequel le nœud de réseau comprend le système de traitement de paquets et éventuellement le nœud de réseau est un élément de passerelle de réseau à large bande.

3. Procédé selon l'une des revendications précédentes, dans lequel - dans la troisième étape - le processeur de mise en forme de trafic (40) applique une mise en forme de trafic aux paquets de données considérés (50) au moyen des informations d'identification de files d'attente respectives (51), et :
- dans lequel la multitude de files d'attente différentes est un nombre de files d'attente supérieur à 10000, dans lequel chacune desdites files d'attente a une profondeur ou une capacité de stockage supérieure à 10 Mo, et/ou
- de l'application d'un ordonnancement hiérarchique des paquets de données considérés (50).

4. Procédé selon la revendication 3, dans lequel l'ordonnancement hiérarchique comprend le fait d'exécuter une décision d'ordonnancement, sur la base de limites de débit avec des dépendances hiérarchiques, tout en prenant en considération différentes classes de qualité de service (QoS : quality of service).

5. Procédé selon l'une des revendications 3 et 4, dans lequel chacun des paquets de données considérés (50) est - en plus d'être lié à sa file d'attente sélectionnée :
- lié à une classe de trafic spécifique parmi une pluralité de classes de trafic différentes, et
- lié à un utilisateur ou client spécifique du réseau de télécommunications (100) d'une pluralité d'utilisateurs ou clients du réseau de télécommunications (100), et
- lié à un premier nœud de réseau spécifique du réseau de télécommunications (100), et à au moins un second nœud de réseau spécifique du réseau de télécommunications (100), le premier nœud de réseau spécifique se rapportant à un premier étage du réseau d'agrégation, et l'au moins un second nœud de réseau spécifique se rapportant à un second étage du réseau d'agrégation, et
dans lequel l'application de l'ordonnancement hiérarchique des paquets de données considérés (50) implique un ordonnancement qui prend simultanément en compte la relation de chacun des paquets de données considérés (50) avec la file d'attente sélectionnée, avec sa classe de trafic spécifique, avec son utilisateur ou client spécifique et avec ses premier et second nœuds de réseau spécifiques.

6. Procédé selon la revendication 5, dans lequel l'ordonnancement hiérarchique des paquets de données considérés (50) implique l'application d'une limite de débit concernant les paquets de données considérés (50) par rapport à la file d'attente sélectionnée, à la classe de trafic spécifique, à l'utilisateur ou au client spécifique ainsi qu'à la fois au premier et au second nœud de réseau spécifique.

7. Procédé selon l'une des revendications précédentes, dans lequel le processeur de mise en forme de trafic (40) applique en outre une mise en forme de trafic aux paquets de données considérés (50) au moyen d'une gestion active de files d'attente, en utilisant éventuellement un ou plusieurs des algorithmes suivants : taildrop (abandon du bout de la queue), la détection précoce aléatoire, RED (random early détection) ou la détection précoce aléatoire pondérée, WRED (weighted random early détection), le délai contrôlé, CoDel (controlled delay), et le contrôleur intégral proportionnel amélioré, PIE (proportional intégral controller enhanced),
et/ou au moyen d'au moins l'un des éléments suivants :
- l'abandon actif de paquets de données considérés,
- la mise à un de drapeaux de notification explicite d'encombrement, ECN (explicit congestion notification), et
- l'adjonction aux paquets de données considérés d'informations plus évoluées sur l'encombrement.

8. Procédé selon l'une des revendications précédentes, dans lequel le processeur de mise en forme de trafic (40) assure en outre un comptage du trafic sortant de la multitude de files d'attente différentes, éventuellement au moyen du comptage d'un nombre d'octets et/ou d'un nombre de paquets, dans lequel ledit comptage est effectué de manière indépendante pour chacune des files d'attente de la multitude de files d'attente différentes dans le processeur de mise en forme de trafic (40).

9. Procédé selon la revendication 1, dans lequel l'information d'identification de file d'attente correspond à un nombre consécutif.

10. Procédé selon l'une des revendications 5 à 9, dans lequel le premier nœud de réseau spécifique du réseau de télécommunications (100) correspond à un nœud d'accès, éventuellement à un nœud multiplexeur d'accès à la ligne d'abonné numérique (DSLAM : digital subscriber line access multiplexer :), à un nœud de terminaison de ligne optique (OLT : optical line termination), ou à un nœud DPU, de point de distribution (distribution point), desservant l'utilisateur ou le client spécifique, et/ou dans lequel le second nœud de réseau spécifique du réseau de télécommunications (100) correspond à une passerelle de réseau à large bande desservant l'utilisateur ou le client spécifique.

11. Nœud de réseau comprenant un système de traitement de paquets (10), le système de traitement de paquets (10) étant configuré pour mettre en œuvre le procédé selon l'une des revendications 1 à 10.

12. Réseau de télécommunications (100) comprenant un nœud de réseau selon la revendication 11.

13. Programme comprenant un code de programme lisible par ordinateur ou une description de logique matérielle, qui, lorsqu'il est exécuté sur un ordinateur ou sur un nœud de réseau d'un réseau de télécommunications (100) ou sur un système de traitement de paquets (10) ou sur un circuit ASIC, fait mettre en œuvre à l'ordinateur ou au nœud de réseau du réseau de télécommunications (100) ou au système de traitement de paquets (10) ou au circuit ASIC un procédé selon l'une des revendications 1 à 10.

14. Produit-programme informatique ou produit de description de logique matérielle pour la mise en forme de trafic dans un système de traitement de paquets (10), le produit-programme informatique comprenant un programme informatique stocké sur un support de stockage, le programme informatique comprenant un code de programme qui, lorsqu'il est exécuté sur un ordinateur ou sur un nœud de réseau d'un réseau de télécommunications (100) ou sur un système de traitement de paquets (10) ou sur un circuit ASIC, fait mettre en œuvre à l'ordinateur ou au nœud de réseau du réseau de télécommunications (100) ou au système de traitement de paquets (10) ou au circuit ASIC un procédé selon l'une des revendications 1 à 10.
